# EUROPEAN PATENT APPLICATION

(11) **EP 1 085 746 A1**
(43) Date of publication of application: **21.03.2001**
(21) Application number: 00119420.8
(22) Date of filing: 13.09.2000
(51) Int. Cl.: H04N 1/401

(54) **Image reading apparatus and method**

(30) Priority: 14.09.1999 JP 25968999; 28.01.2000 JP 2000019629
(71) Applicant: Ricoh Company, Ltd., Tokyo 143-8555 (JP)
(72) Inventor: Ozaki, Tatsuya, Atsugi-shi, Kanagawa (JP); Kokawaji, Takashi, Atsugi-shi, Kanagawa (JP)
(74) Representative: Schwabe - Sandmair - Marx

(57) **Abstract**

An image reading apparatus includes an optical system which irradiates light onto an original being transported and receives light reflected by the original, and a white reference member for shading correction. The optical system irradiates the light onto the white reference plate and receives the reflected light before and after the original is optically read by the optical system. A control unit detects a trouble in the optical system by using information obtained from the reflected light before and after the original is optically read.

## Description

### BACKGROUND OF THE INVENTION

### 1. Field of the Invention

The present invention relates to an image reading apparatus and method, and more particularly to a technique for preventing erroneous pixel detection using a shading correction function.

### 2. Description of the Related Art

An image reading apparatus is known in which an original is optically scanned and a resultant light is converted into an electronic signal so that images of the original are optically read. In advance of reading images of the original, light is irradiated onto a white reference plate defining the reference of white and shading correction is made using a reflected light therefrom.

An image reading apparatus as described above is disclosed in, for example, Japanese Laid-Open Patent Application No. 6-303428. An image reading apparatus disclosed in the above application has an arrangement in which an alarm is raised if read information includes black pixels that exist successively in the main scanning direction so as to form a line of black on the original.

Japanese Laid-Open Patent Application No. 8-149249 discloses an image reading apparatus equipped with the function of detecting dust or dirt on an optical system from information obtained by reading the white reference plate for shading correction. Japanese Laid-Open Patent Application No. 5-75853 discloses an image reading apparatus having the function of detecting abnormality in the optical system by displaying and recording analog data of read information concerning the white reference plate amounting to one line. Japanese Laid-Open Patent Application No. 7-184047 discloses an image reading apparatus designed to detect a trouble in the optical system by recording data obtained by optically reading the white reference plate at a given time on part of a recording paper. Japanese Laid-Open Patent Application No. 5-167855 discloses an image reading apparatus designed to prevent a ground portion of the original from being erroneously recognized as black pixels by detecting an unusual level in the information obtained by optically reading the white reference plate and thus preventing erroneously shading correction from being made.

However, the proposal disclosed in Japanese Laid-Open Patent Application No. 6-303428 has a disadvantage in that a ruled line which is a true image of the original may be recognized as a defective image. Thus, the proposal is not adequate to applications which require highly precise abnormality detection.

The method of detecting abnormality from the read information concerning the white reference plate for shading correction to be made in advance of reading images of the original has the following disadvantage. Dust on the original may adhere to an exposure glass (original contact glass) on which the original is placed. Hence, it is required to improve the reliability in abnormality detection. In addition to the above, it is required to locate the cause of the abnormality in order to promptly cope with it.

### SUMMARY OF THE INVENTION

It is a general object of the present invention to provide an image reading apparatus and method in which the above disadvantages are eliminated.

A more specific object of the present invention is to provide an image reading apparatus and method capable of detecting and locating a trouble reliably during optical reading operation.

The above objects of the present invention are achieved by An image reading apparatus comprising: an optical system which irradiates light onto an original being transported and receives light reflected by the original; a white reference member for shading correction, the optical system irradiating the light onto the white reference plate and receiving the reflected light before and after the original is optically read by the optical system; and a control unit which detects a trouble in the optical system by using information obtained from the reflected light before and after the original is optically read.

The above objects of the present invention are also achieved by an image reading method comprising the steps of: (a) irradiating light onto an original being transported and receiving light reflected by the original; (b) irradiating light onto a white reference member for shading correction and receiving light reflected by the original before and after the step (a); and (c) detecting a trouble in an optical system involved in the steps (a) and (b) by using information obtained from the reflected light before and after the steps (a) and (b).

### BRIEF DESCRIPTION OF THE DRAWINGS

Other objects, features and advantages of the present invention will become more apparent from the following detailed description when read in conjunction with the accompanying drawings, in which:
Fig. 1 is a block diagram of a facsimile machine according to a first embodiment of the present invention;
Fig. 2 is a diagram of an original feeding and reading unit provided in the facsimile machine;
Figs. 3A and 3B are graphs illustrating how an image on an original is read;
Fig. 4 is a flowchart of an operation of the first embodiment of the present invention;
Fig. 5 is a flowchart (part 1) of an operation of a facsimile machine according to a second embodiment of the present invention;
Fig. 6 is a flowchart (part 2) of the operation of the facsimile machine according to the second embodiment of the present invention;
Fig. 7 is a diagram showing combinations of results of an abnormal pixel detecting process employed in a facsimile machine according to a third embodiment of the present invention;
Fig. 8 is a flowchart (part 1) of an operation of the facsimile machine according to the third embodiment of the present invention;
Fig. 9 is a flowchart (part 2) of the operation of the facsimile machine according to the third embodiment of the present invention;
Fig. 10 is a block diagram of a facsimile machine according to a fourth embodiment of the present invention;
Fig. 11 is a block diagram of a scanner shown in Fig. 10;
Fig. 12 is a flowchart of an operation of the facsimile machine according to the fourth embodiment of the present invention;
Fig. 13 is a diagram of a message issued in the facsimile machine according to the fourth embodiment of the present invention;
Fig. 14 is a flowchart of an operation of a facsimile machine according to a fifth embodiment of the present invention; and
Fig. 15 is a diagram of a message issued in the facsimile machine according to the fifth embodiment of the present invention.

### DESCRIPTION OF THE PREFERRED EMBODIMENTS

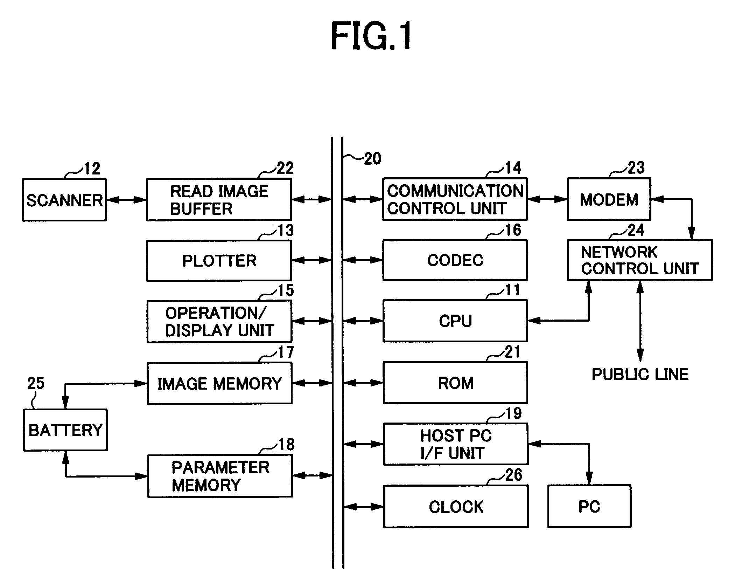

Fig. 1 is a block diagram of a facsimile machine equipped with an image reading apparatus according to a first embodiment of the present invention. The facsimile machine includes a CPU 11, a scanner 12, a plotter 13, a communication control unit 14, an operation/display unit 15, an encoder/decoder (codec) 16, an image memory 17, a parameter memory 18, and an a host PC/IF unit 19, these structural elements being connected to a system bus 20. The CPU 11, which may be a microcomputer, issues various instructions in accordance with a control program stored in a ROM 21 and thus controls the entire facsimile machine.

The scanner 12 includes a CCD (Charge-Coupled Device) or a contact-type sensor, which optically scans an original in a line unit in the main scanning direction, and image data thus obtained is sent to and stored in a read image buffer 22. The read image buffer 22 is capable of storing image data equal to several lines to tens of lines (may be hundreds of lines) and outputting image data to a destination every line in an output formation which matches the destination. An abnormal pixel can be detected by detecting a black pixel contained in the image data stored in the read image buffer according to the first embodiment of the present invention, as will be described in detail later.

The plotter 13 records the read image data and various reports on a recording medium such as a sheet of paper. The communication control unit 14 controls the modem 23, which modulates and demodulates the image data and various sequence signals to be transmitted. Further, the communication control unit 14 transmits and receives image data via a network control unit 24, which controls a given line or channel control to connect and disconnect the facsimile machine to and from a telephone line at the time of sending a call or receiving a call. The operation/display unit 15 includes a display LCD (Liquid Crystal Display) and/or LED (Light-Emission Device), and displays a variety of information such as that showing the status of operation. Also, the operation/display unit 15 includes operation keys operated by an operator. The codec 16 compresses image data to be transmitted by a known encoding method and decodes received image data to retrieve the original image data.

The image memory 17 stores image data read by the scanner 12 and image data received in a compressed fashion. The parameter memory 18 stores various parameters necessary to realize given controls. A battery 25 backs up the image memory 17 and the parameter memory 18. Data stored in the memories 17 and 18 will not be lost even if the power supply is turned OFF. The image memory 17 may be formed of a DRAM (Dynamic Random Access Memory), and may retain data stored therein for a few of hours even after the power supply is turned OFF. The parameter memory 18 may be formed of an SRAM (Static RAM) and may retain data stored therein for a few of years after the power supply is turned OFF.

The host PC/IF unit 19 presents an interface via which commands, response data and image data are transferred between the facsimile machine and a personal computer (which is illustrated as PC in Fig. 1). The interface of the host PC/IF unit 19 has any of the conventional interface specifications. A reference number 26 indicates a clock which presents the current time. The clock 26 may be formed of an IC chip and the current time can be written into and read from the IC chip. The clock 26 defines the time standard in the facsimile machine.

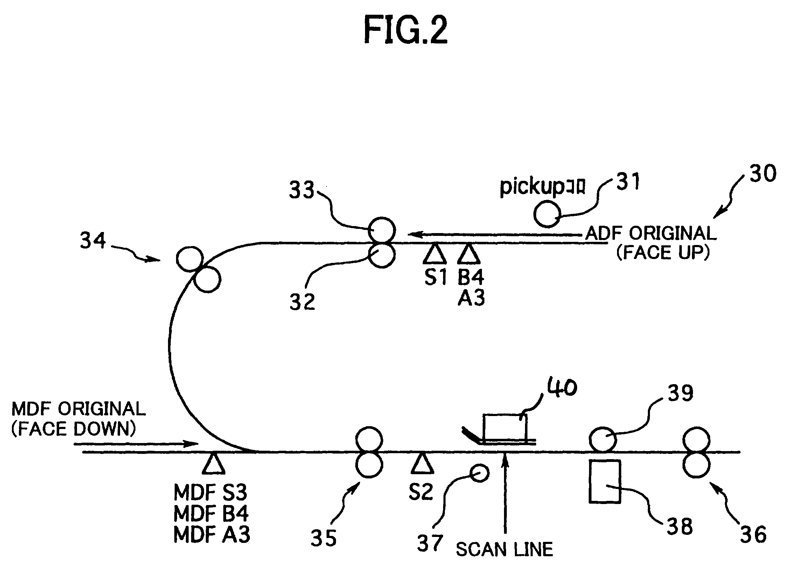

Referring to Fig. 2, the facsimile machine is equipped with a conventional original feeding unit 30 for feeding an original. The original feeding unit 30 acts as an automatic document feeder and operates as follows. One or a plurality of originals are placed on a document table in a stacked formation so that image surfaces of the originals face up. The original are fed by means of a pickup roller 31 and are held by a feed roller 32 rotating in the forward direction with respect to the transportation direction and a reverse roller 33 rotating in the reverse direction. The feed roller 32 contacts the document placed at the top of the stacked formation of the originals, so that the original is fed out. In contrast, the reverse roller 33 feeds back the remaining originals underlying the top original. Thus, the top document can be definitely picked up and fed out. The selected document is then transported forwardly by pairs of feed rollers 34 and 35, and is ejected by a pair of eject rollers 36.

The original feeding unit 30 also acts as a manual document feeder. An original manually fed is held by the pair of rollers 35 and is passed to the pair of eject rollers 36. The scanner 12 is arranged to read the image on the original held and transported by the pairs of rollers 34 and 35 in a so-called sheet through formation. Light from a xenon lump 37 is irradiated onto the original which passes over a scan line located between the pair of rollers 34 and the pair of rollers 35. Light reflected by the original is received by the CCD or contact-type sensor (not shown for the sake of simplicity), which outputs image data to be copied or transmitted. The image data thus obtained is transmitted to the plotter 13 or the communication control unit 14 via the read image buffer 22.

The original feeding unit 30 is equipped with sensors S1, S2, S3, B4 and A4 which sense the original in the respective positions. The sensor S1 senses the original placed on the document table and transported by the automatic document feeding function. The sensor S3 senses the original manually fed and transported by the manual document feeding function. The sensors B4 and A3 respectively discriminate the B4 size and the A3 size from the other document sizes. Before transporting the original over the scan line, the original transporting unit 30 pre-feeds the original by the pair of feed rollers 35 by a predetermined amount of transportation after the front end of the original is sensed by the sensor S2. A stamp device 38 adds a mark to the original which has been processed. The original is pushed against a roller 39 by the stamp device 38.

In advance of reading or feeding the original, the light emitted by the xenon lump 37 is irradiated onto a white reference plate (white reference plate) 40, which reflects the irradiated light. The reflected light is used for shading correction in which the white reference is corrected. Information concerning deformations of the xenon lump 37 in the main scanning direction and the optical system is stored for every pixel. When the original image is really binarized, the shading correction is performed on the pixel basis, so that the document can be read at an even density level.

In the shading correction, if there is dust or dirt on the optical system, an abnormal pixel will be included in data for use in the shading correction at the time of storing the above data. Thus, at the time of normal read, related pixels are successively subjected to the shading correction in the sub-scanning direction with respect to the abnormal pixel. Thus, an abnormal black line will occur in the read image. Particularly, in the reading of the sheet-through type, the original contact glass or the white reference plate 40 may be contaminated due to ink of a ballpoint pen or a white liquid for correction which adheres to the original in a wet state. Such a contamination may also take place when the original includes letters or drawings written by a pencil. A trouble will be identified if the image that has been contaminated as described above is printed out. However, if the image is transmitted to a remote destination without printing it out, the trouble will not be identified by the operator, and the image containing an unwanted black line or the like will be sent to the remote destination.

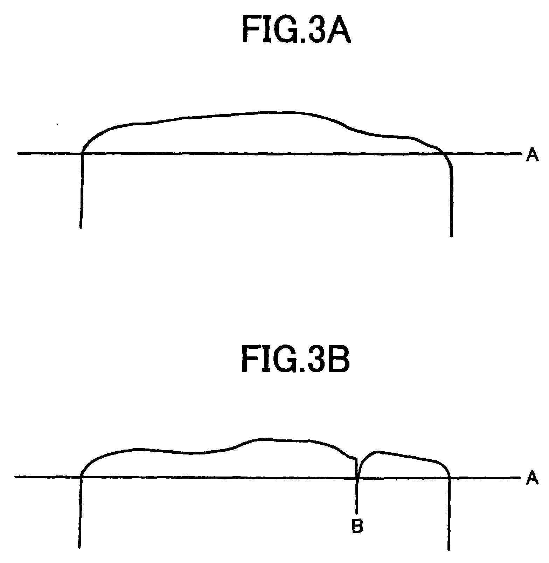

With the above in mind, in the shading correction according to the first embodiment of the present invention, data for use in the shading correction (shading correction data) is binarized assuming that all pixel data are flat data. In this case, adequate shading correction may not be made with the above-mentioned shading correction data and may not produce shading-corrected data having an even density. However, it is possible to detect a black pixel because of dust or dirt by setting the threshold level for binarization relatively close to the black side. This will be described in more detail with reference to Figs. 3A and 3B.

It is assumed that original data that has not been subjected to the shading correction has a waveform shown in Fig. 3A in which the threshold level for binarization is defined as indicated by a line A. The threshold level A is closer to the black side. With the above setting of the threshold level A, it is possible to read all pixels in the main scanning direction as white data. As shown in Fig. 3B. if there is a pixel B closer to the black-side level than the threshold level B for binarization due to dust or dirt, the shading correction data after binarization includes a black pixel, which can be detected or determined as an abnormal pixel. In practice, the facsimile machines will have respective, optimal threshold levels A. Thus, it is preferable to easily modify the threshold level in each facsimile machine. It is possible to set the optimal threshold level in each facsimile machine at the time of shipping.

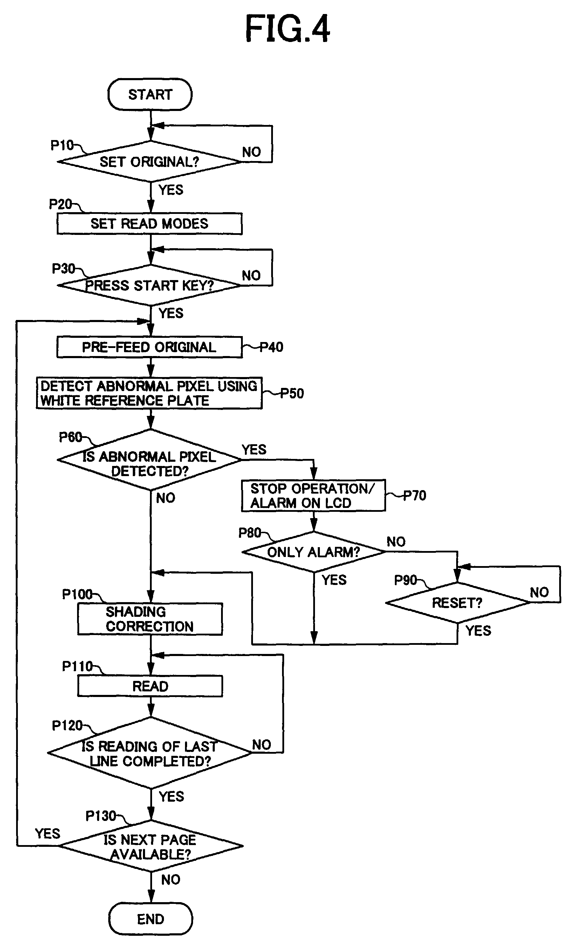

Referring to Fig. 4, the CPU 11 of the facsimile machine determines whether an original is positioned in place at step P10. The operator sets various operating modes in the facsimile machine at step P20, and presses a start key. The CPU 11 determines whether the start key is operated at step P30. When the answer of step P30 is YES, the CPU 11 initiates an original pre-feed operation at step P40 in which each sheet is moved to a position just before the scanner line and is stopped there. Simultaneously, the CPU 11 performs an abnormal pixel detecting process using the white reference plate at step P50. If it is determined that an abnormal pixel is detected at step P60, the CPU 11 interrupts the read operation due to occurrence of error, and drives the LCD of the operation/display unit 15 to display an alarm message thereon at step P70.

If an abnormal pixel is not detected at step P60 or it is determined at step P80 that only an alarm should be raised, the CPU 11 proceeds with step P100. If the facsimile machine is set so that the operation should be interrupted (NO at step P80), the CPU 11 determines whether a reset operation has been performed at step P90. In the reset operation, the CPU 11 causes a message that invites an associated user operation to be displayed on the operation/display unit 15. If the stop key is operated in response to the above-mentioned message, the CPU 11 interrupts the read operation. If the start key rather than the stop key is pressed as a reset request issued after confirmation of the trouble, the CPU 11 continues to control the read operation. If there is no key operation, the CPU 11 automatically restarts to control the read operation when a predetermined time passes. Then, the process proceeds with step P100.

The CPU 100 makes the shading correction at step P100. The read operation is repeatedly performed every line and the shading correction thereon is repeatedly made at steps P100 and P110 until it is determined, at step P120, that the last line is completely read. When the answer of step P120 is YES, the CPU 11 determines whether there is the next page or original at step P130. When the answer of step P130 is YES, the CPU 11 returns to step P40. Then, the original is pre-fed at step P40, and the white reference plate is read at step P50. If the answer of step P130 is NO, the CPU 11 ends the read operation.

As described above, according to the present invention, the white reference plate is read and the decision of step P60 is made not only before the read operation is initiated but also the next page or original is read in the read operation. Thus, it is possible to certainly detect occurrence of an abnormality even when dust or dirt adheres to the optical system due to transportation of the original after the read operation is initiated. In addition, it is possible to notify the user at which page or original dust or dirt adhered to the optical system and to promptly cope with the trouble and restore the facsimile machine from the trouble.

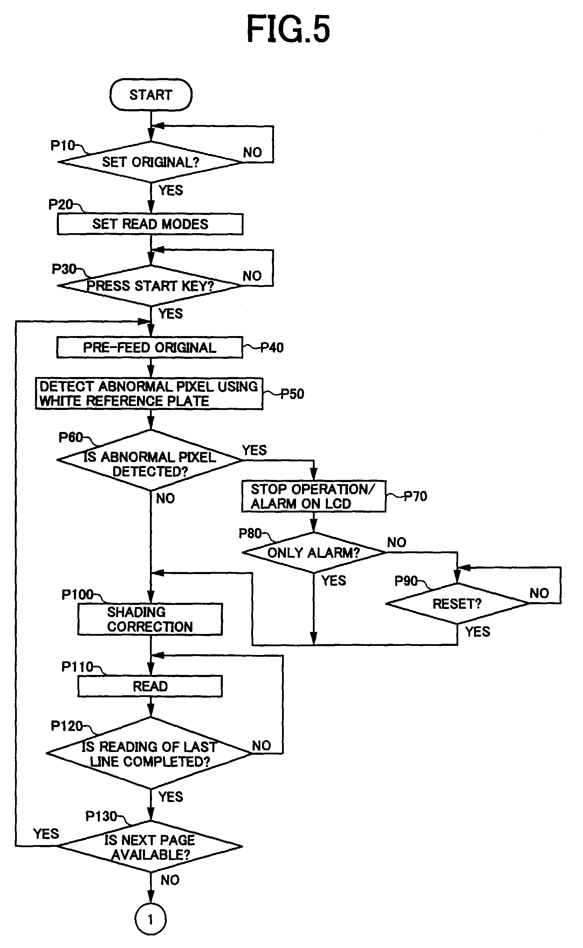

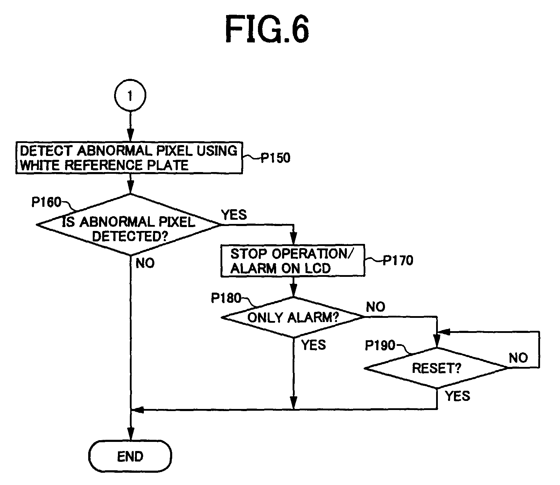

Figs. 5 and 6 are respectively flowcharts of an operation of a facsimile machine according to a second embodiment of the present invention. In Figs. 5 and 6, the same steps as those shown in Fig. 4 are given the same reference numbers as previously. The facsimile machine according to the second embodiment of the present invention has the same configurations as those of the first embodiment thereof shown in Fig. 1, 2, 3A and 3B.

When all the originals or pages have been processed in accordance with the sequence consisting of steps P10 - P130 shown in Fig. 5, the CPU 11 reads the white reference plate 40 again at step P150 and determines whether an abnormal pixel exists at step P160. If an abnormal pixel is detected at step P160, the CPU 11 interrupts the read operation due to occurrence of error, and drives the LCD of the operation/display unit 15 to display the alarm message thereon at step P170.

If an abnormal pixel is not detected at step P160 or it is determined at step P180 that only the alarm should be raised, the CPU 11 ends the read process. If the facsimile machine is set so that the operation should be interrupted (NO at step P180), the CPU 11 determines whether the reset operation has been performed at step P190. In the reset operation, the CPU 11 causes a message that invites an associated user operation to be displayed on the operation/display unit 15. If the stop key is operated in response to the above-mentioned message, the CPU 11 interrupts the read operation. If the start key rather than the stop key is pressed as a reset request issued after confirmation of the trouble, the CPU 11 continues to control the read operation. If there is no key operation, the CPU 11 automatically restarts to control the read operation when a predetermined time passes. Then, the process ends the read process.

According to the second embodiment of the present invention, the white reference plate 40 is read and it is determined whether an abnormal pixel is contained after the last page or original is processed. If an abnormal pixel is detected, the position of such an abnormal pixel is memorized. Thus, it is possible to recognize a first situation in which an abnormal pixel is detected before the read operation is started but is not detected after all the pages or originals are processed. It can be determined that the above abnormal pixel may result from temporary dust or dirt. It is also possible to recognize a second situation in which an abnormal pixel is detected after all the pages or originals are processed although the abnormal pixel was not detected before the read operation is started. The second situation can be interpreted so that dust or dirt adheres to the optical system during the read operation. Thus, the user can be alarmed to the occurrence of dust or dirt due to ink of a ballpoint pen which adheres to the original or page during the read operation.

The above-mentioned first situation can be handled so that dust or dirt was removed naturally. In this case, it is not required to raise an alarm. If an abnormal pixel is detected before and after the document read operation, it is recognized that dust or dirt results from ink of the ballpoint pen or like and cannot be removed naturally. The alarming can be modified so that an alarm cannot be raised unless the abnormal pixel is detected before and after the document read operation. Thus, it becomes possible to certainly notify the user of occurrence of a trouble to be manually handled. In the above case, the abnormal pixel is detected twice and the alarm is raised. However, the alarming is not limited to the above. In the sheet-through type, dust may be discharged together with the original in repetitive original transportation. Thus, it may be possible to statistically obtain an optimal threshold number of times of repetitive detection of the abnormal pixel (for example, five times). If the abnormal pixel is successively detected less than the optimal threshold number of times, it is recognized as a temporary abnormal pixel. In other words, if the abnormal pixel is successively detected the optimal threshold number of times or more, it is a permanent abnormal pixel, so that an alarm is raised.

According to the second embodiment of the present invention, it is possible to determine whether the abnormal pixel results from a temporary cause such as dust which can be removed naturally or a permanent cause (for example, dirt such as ink of the ballpoint pen) which cannot be removed naturally. In addition, the user is alarmed only when the abnormal pixel is successively detected the optimal threshold number of times. Thus, it is possible to prevent the user from being alarmed unnecessarily and avoid interruption of the read operation in the situation in which the trouble is naturally eliminated.

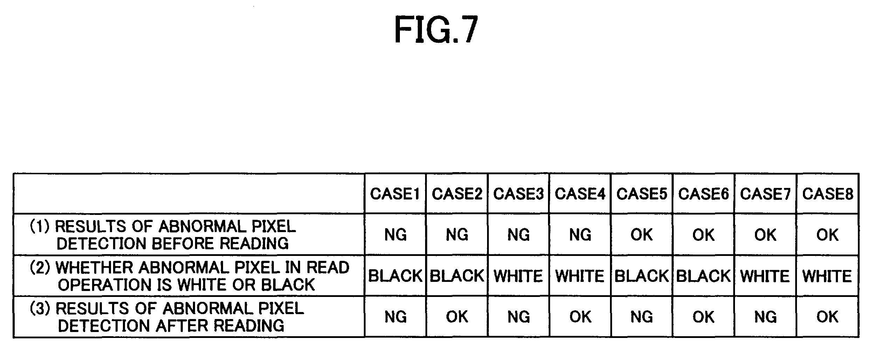

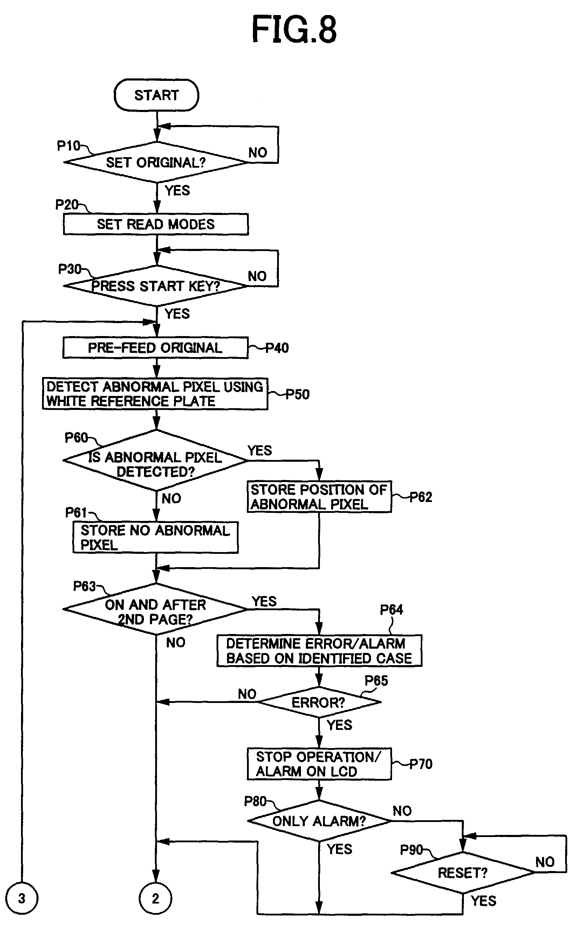

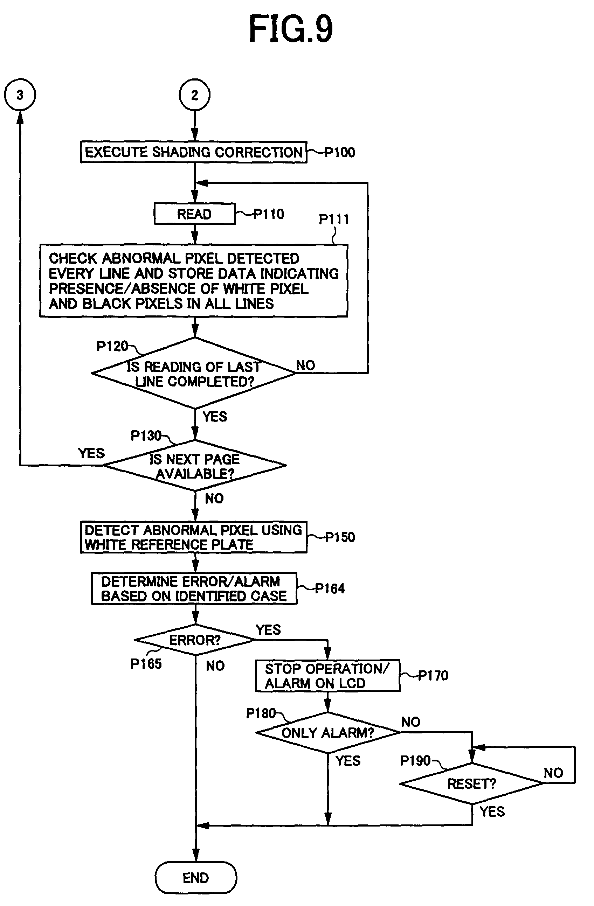

A description will be given, with reference to Figs. 7, 8 and 9, of a facsimile machine according to a third embodiment of the present invention. Figs. 8 and 9 are respectively flowcharts of an operation of the facsimile machine according to the third embodiment of the present invention, in which the same steps as those shown in Fig. 4 are given the same reference numbers as previously. The facsimile machine according to the third embodiment of the present invention has the same configurations as those of the first embodiment thereof shown in Fig. 1, 2, 3A and 3B.

The CPU 11 in the third embodiment of the present invention performs the process of detecting an abnormal pixel before and after each page is read. The CPU 11 determines which one of eight combinations of the result of the detection process shown in Fig. 7 coincides with the result of the above detection process. The original read sequence shown in Figs. 8 and 9 depends on the result of the detection process. After the CPU 11 confirms that all the pages have been processed (steps P10 - P130), it performs the process of detecting an abnormal pixel and outputting an alarm message based on the result of the detection process (steps P150 - P190).

At step P60, the CPU 11 determines whether an abnormal pixel is detected by the detection process of step P50 using the white reference plate 40. If no abnormal pixel is detected, the CPU 11 stores information indicating the absence of an abnormal pixel in the memory at step P61. In contrast, if an abnormal pixel is detected at step P60, the CPU 11 memorizes the position of the abnormal pixel at step P62. Then, regardless of whether an abnormal pixel is detected or not, the CPU 11 proceeds with step P100 when it is determined, at step P63, that the currently processed page is the first page of the original or the single-page original

When the original set in the facsimile machine consists of only one sheet, the shading correction is made at step P100, and the read operation is repeatedly performed every line at step P110. In addition to the read operation, the process of detecting an abnormal pixel is performed every line so that data indicating the presence/absence of white pixels and black pixels in all the line are stored at step P111. After the read operation on the last line of the page or sheet being processed is ended at step P120, it is determined whether there is the next page at step P130. In the present case being considered, the original consists of only one page. Thus, the result of step P130 is NO, and the process proceeds with step P150, at which the process of detecting an abnormal pixel is performed. At subsequent step P164, the CPU 11 refers to the data indicating the presence/absence of white pixels in each line and black pixels in all the lines obtained at step P111 and the combinations of the detection results shown in Fig. 7. Then, the CPU 11 checks the presence/absence of an error and identifies the position of the abnormal pixel to be alarmed to the user. If no error occurs, the CPU 11 ends the read operation. In contrast, if the CPU 11 recognizes the occurrence of an error to be alarmed at step P165, the CPU 11 causes the operation/display unit 15 to issue an alarm message dependent on the associated combination the detection results shown in Fig. 7. Then, the CPU 11 executes steps P170 through P190 as described before, and ends the read operation. When the original consists of two pages or more as will be described below, the last page of the original is processed in accordance with steps P100 through P190.

When two or more originals are set in the facsimile machine (or the original consists of two or more pages), the shading correction is made at step P100, and the read operation is repeatedly performed every line at step P110. In addition to the read operation, the process of detecting an abnormal pixel is performed every line so that data indicating the presence/absence of white pixels and black pixels in all the line are stored at step P111. After the read operation on the last line on the page being processed is ended at step P120, the result of step P130 is YES in the case being considered. The read process returns to step P40 at which the pre-feed operation is performed. Then, the steps P50 through P130 are executed with regard to the next page. The result of step P63 is YES, and the CPU 11 executes step P64.

At step P64, the CPU 11 refers to the data indicating the presence/absence of white pixels in each line and black pixels in all the lines obtained at step P111 and the combinations of the detection results shown in Fig. 7. Then, the CPU 11 checks the presence/absence of an error and identifies the position of the abnormal pixel to be alarmed to the user. If no error occurs, the CPU 11 ends the read operation. In contrast, if the CPU 11 recognizes the occurrence of an error to be alarmed at step P65, the CPU 11 causes the operation/display unit 15 to issue an alarm message dependent on the associated combination the detection results shown in Fig. 7. Then, the CPU 11 executes steps P70 through P90 as described before, and ends the read operation.

Fig. 7 shows case 1 through case 8 as to the combinations of the results of the detection of abnormal pixels performed before and after each page is read.

In case 1, a black pixel is detected before and after the original (page) is read and during the read operation. Thus, case 1 is recognized as a situation in which dirt or dust adheres to any part of the optical system, such as the original contact glass, the CCD, the contact-type sensor or the white reference plate 40. An alarm message is issued which includes information concerning the position of a factor which causes the black pixel (a structural component involved in the read operation or the position in the main scanning direction). In any of the remainder cases 2 through 8, an alarm message includes information concerning the position of a factor which causes the black pixel.

In cases 2 and 4, the black pixel that is detected before the original is read is not detected after the original is read (ejected). Thus, cases 2 and 4 are recognized as a situation in which dust temporarily adheres to the optical system and is then swept away by the original.

In case 3, a black pixel is not detected while the original is being read but is detected before and after the read operation. Thus, case 3 is recognized as a situation in which dust adheres to the white reference plate 40.

In cases 5 and 7, a black pixel is not detected before the original is read but is detected after the read operation. Thus, cases 5 and 7 are recognized as a situation in which dust adheres to the optical system by the original that has just been read. The detection of a black pixel that is performed for the next time will show whether the dust temporarily adheres to the optical system.

In case 6, a black pixel is not detected before and after the original is read, but is detected during the read operation. Thus, case 6 can be recognized as a situation in which a ruled line on the original is detected.

In case 8, a black pixel is not detected before and after the original is read and during the read operation. Thus, case 8 is recognized as a situation in which there is no trouble.

If abnormal pixels are detected in a plurality of positions in the process of detecting an abnormal pixel before the document is read, it is required to check whether each of the positions still includes the abnormal pixel during and after the read operation.

According to the second embodiment of the present invention, it is possible to identify what trouble occurs in the optical system including the white reference plate 40 on the basis of the presence/absence of a black pixel in the same position before and after the original is read and during the read operation. Thus, it is possible to give the user an alarm message only when the trouble that will not be eliminated naturally is detected. The alarm message includes the structural component or position which causes the trouble. Thus, it is possible for the user or the maintenance person to cope with the trouble more appropriately.

In the first through third embodiments of the present invention, the shading correction is made in combination with the process of detecting an abnormal pixel. Alternatively, data for the shading correction is acquired in advance, and thereafter the process of detecting an abnormal pixel is repeatedly performed.

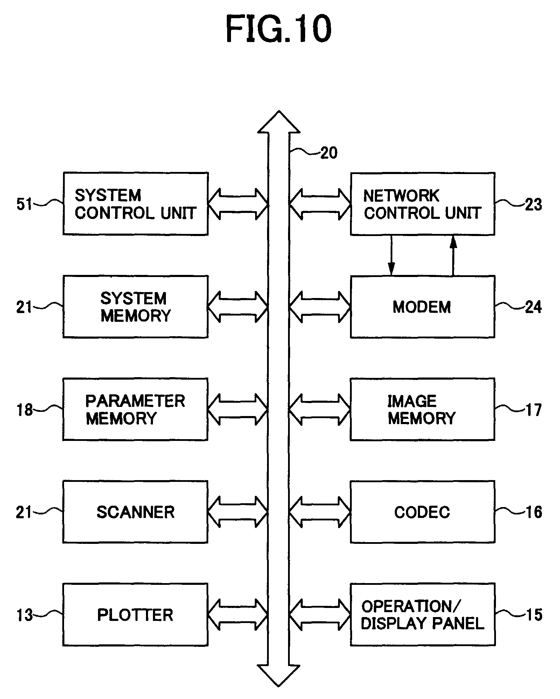

A description will be given, with reference to Figs. 10 through 13, of a facsimile machine according to a fourth embodiment of the present invention. Any part shown in Figs. 10 through 13 that is the same as a part shown in the previously described figures is denoted by the same reference numeral in these figures.

Referring to Fig. 10, the facsimile machine includes a system control unit 51, the scanner 12, the plotter 13, the operation panel 15, the codec 16, the image memory 17, the parameter memory 18, the system memory 21, the modem 23, and the network control unit 24, these structural components being connected to the system bus 20. The system control unit 51, which includes a CPU or the like, issues various instructions in accordance with a control program stored in the system memory 21 along with a variety of data, while using the system memory 21 as a work area in order to control the entire facsimile machine. The system control unit 51 includes a communication control unit, which transmits and receives image information by the modem 24 and the network control unit 23. The modem 23 has a low-bit-rate modem function (V.21 modem) for sending and receiving transmission sequence signals, and a high-bit-rate modem function (V.34 modem, V.29 modem. V.27 ter modem and so on) for sending and receiving image information.

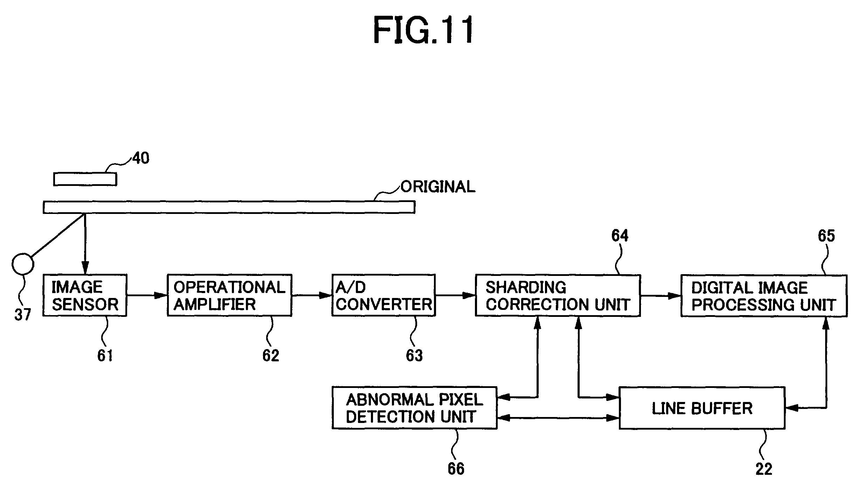

Referring to Fig. 11, the scanner 12 includes an image sensor 61, an operational amplifier 62, an A/D converter 63, a shading correction unit 64, a digital image processing unit 65, the line buffer 22 and the white reference plate 40. Further, the scanner 12 includes an abnormal pixel detection unit 66.

The image sensor 61 converts the reflected light (signal) from the original onto which light is irradiated by the xenon lump 37 into an analog electric signal. The operational amplifier 62 amplifies the analog image signal from the image sensor 61 at a given amplification ratio and converts a comparatively high input impedance into a comparatively low output impedance. The A/D converter 63 quantizes the analog image signal from the operational amplifier 62 on the basis of a given reference level. The shading correction unit 64 corrects a shading distortion superimposed on the digital image signal due to a factor in the optical system. The digital image processing unit 65 subjects the digital image signal from which the shading distortion has been eliminated to various image processes. The line buffer 22 stores data for shading correction and other data to be referred to in the shading correction and the digital image processes. The white reference plate 40 is used at the time of acquiring data for the shading correction (shading correction data).

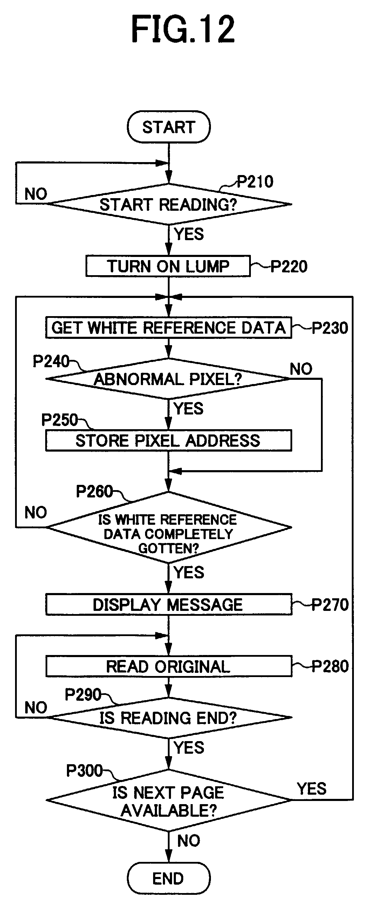

Fig. 12 is a flowchart of an operation of the scanner 12. When an instruction to start to read the original is given at step P210, the system control unit 51 starts to feed the original and turns ON the xenon lump 37 at step P220. lump 37 at step P220. Until the original reaches the scanner line (the document reading position), light reflected by the white reference plate 40 is incident to the image sensor 61. Electric image information of the white reference plate 40 output by the image sensor 61 is amplified and impedance-converted by the operational amplifier 62. The A/D converter 63 receives the output signal of the operational amplifier 62 and quantizes it so that the received image signal is converted into digital data of a given number of bits in which the maximum value of the image signal is handled as a reference for quantization. The digital data thus obtained is stored in the line buffer 22 for the shading correction data (white reference data).

When the original reaches the scanner line (the document reading position), the shading correction unit 64 reads, for every pixel, the shading correction data stored in the line buffer 22, and executes a predetermined operation on the original read signal. Thus, the shading distortion resulting from the optical system and/or the xenon lump 37 is corrected. Then, the original read signal which has been subjected to the shading correction is applied to the digital image processing unit 65, which performs the predetermined various image processes and sends the resultant signal to a specified output destination.

If an obstacle such as paper power or dust exists in the optical path through which the light emitted by the xenon lump 37 is reflected by the white reference plate 40 and is incident to the image sensor 61 in order to obtain the shading correction data, the sensor output level of a pixel affected by the obstacle will be decreased, and a reduced sensor output level will be stored in the line buffer 22. In the shading correction, the level of the above pixel is increased. If the obstacle goes out of the optical path when the original is read, the sensor output level returns to the normal level. In this case, the shading correction excessively increases the level of the pixel which was affected by the obstacle. The excessive increase of the level causes an unwanted white or black line or document ground dust in the read image, so that the quality of the read image is degraded.

With the above in mind, the abnormal pixel detection unit 66 detects an abnormal pixel in the white reference data (shading correction data) as follows. The abnormal pixel detection unit 66 reads the white reference data from the line buffer 22, and obtains the differences between the level of the pixel of interest and the levels of the pixels preceding and following the pixel of interest. If the level differences exceed a predetermined threshold level, the abnormal pixel detection unit 66 recognizes the pixel of interest to be an abnormal pixel. The above process of detecting an abnormal pixel may be carried out before the shading correction data is stored in the line buffer 22.

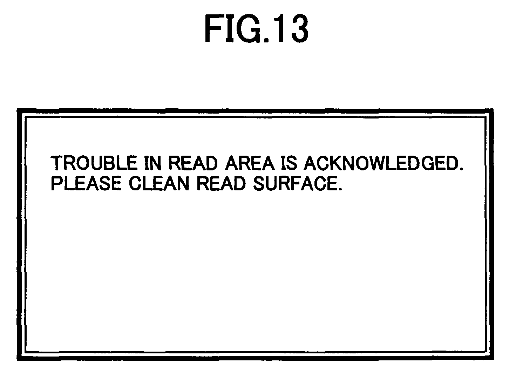

If the abnormal pixel detection unit 66 detects an abnormal pixel in the shading correction data at step P240, the unit 66 temporarily stores the address of the abnormal pixel at step P250. The sequence of steps P230 to P250 is repeatedly performed until the white reference data (shading correction data) to be stored in the line buffer 22 is completely obtained, that is, until the answer of step P260 becomes YES. In contrast, when the abnormal pixel detection unit 66 does not detect any abnormal pixel, the output to the operation/display panel 15 is merely renewed and displayed. Then, the original is read at step P280. If the abnormal pixel detection unit 66 detects an abnormal pixel, a message shown in Fig. 13 is displayed on the operation/display unit 15 at step P270, and the corresponding process based on the setting, such as the process for stopping the operation is performed as in the case of the aforementioned embodiments of the present invention. Then, the read operation is repeatedly performed for every line at steps P280 and P290. If it is determined at step P300 that the next original or page exists after the last line is read, the process returns to step P230.

The fourth embodiment of the present invention can certainly detect occurrence of a trouble in addition to the same advantages as those of the first through third embodiments thereof can be obtained. Further, the memorized address of an abnormal pixel can be used to make a history of occurrence of trouble. The position of the detected trouble with respect to the read width may be displayed on the operation/display panel 15. The history of occurrence of trouble may simply be described using a flag which can be set to 0 or 1.

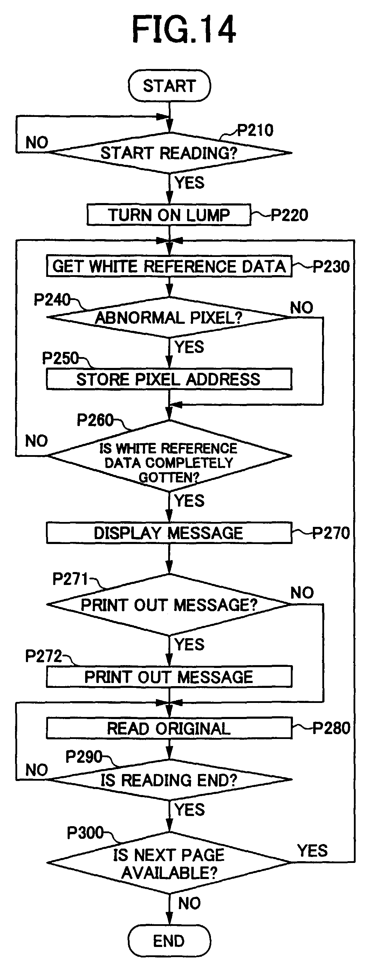

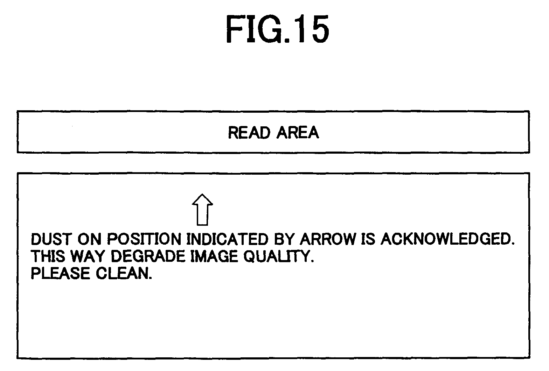

A description will now be given, with reference to Figs. 14 and 15, of a facsimile machine according to a fifth embodiment of the present invention. Any part shown in Figs. 14 and 15 that is the same as a part shown In the previously described figures is denoted by the same reference numeral in these figures.

Referring to Fig. 14, the system control unit 51 shown in Fig. 10 causes the operation/display unit 15 to display the message thereon when the abnormal pixel detection unit 66 detects an abnormal pixel at step P270, and determines whether a message should be printed out at P271. If the answer of step P271 is YES, a mark of an arrow indicating the position of the abnormal pixel in the read area is printed out by the plotter 13 together with an illustration of the read area and a message, as shown in Fig. 15. The longitudinal width of the illustration of the read area corresponds to the main scanning direction. The position of the abnormal pixel is detected by the abnormal pixel detection unit 66. Thus, the position of the trouble can be visually acknowledged and the original contact glass can be cleaned easily and promptly.

According to the fifth embodiment of the present invention, it is possible to visually indicate the position of the detected trouble by printing out the instruction shown in Fig. 15.

In any of the first through fifth embodiments of the present invention, the abnormal pixel detection is checked each time one original (page) is processed. Alternatively, it is possible to perform the abnormal pixel detection only when the first original (page) is read or only when the last original (page) is read.

According to the present invention, it is possible to detect abnormality included in pixel data obtained by optically reading the original even after the reading of the original is started. Hence, the user can remove the corresponding trouble promptly. In this case, the user is notified of the position on the read area in which the trouble occurs or the component which causes the trouble. Thus, it is possible to easily and promptly perform the restoration work. The user is notified of occurrence of a trouble when the trouble is successively detected the given number of times. Thus, it is possible to avoid interruption of the read operation when the trouble is restored naturally.

The present invention is not limited to the specifically disclosed embodiments, and variations and modifications may be made without departing from the scope of the invention.

## Claims

1. An image reading apparatus comprising:
an optical system which irradiates light onto an original being transported and receives light reflected by the original;
a white reference member for shading correction, the optical system irradiating the light onto the white reference plate and receiving the reflected light before and after the original is optically read by the optical system; and
a control unit which detects a trouble in the optical system by using information obtained from the reflected light before and after the original is optically read.

2. The image reading apparatus as claimed in claim 1, wherein the control unit comprises a part which notifies a user of occurrence of the trouble detected.

3. The image reading apparatus as claimed in claim 1, wherein the control unit comprises a part which outputs information indicating a location of the trouble detected.

4. The image reading apparatus as claimed in claim 1, wherein the control unit comprises a part which detects a trouble by additionally referring to information obtained by optically reading the original.

5. The image reading apparatus as claimed in claim 1, wherein the control unit notifies a user of occurrence of a trouble only when the trouble is successively detected a given number of times.

6. The image reading apparatus as claimed in claim 1, further comprising an output part which outputs an indication of the trouble detected by the control unit to an user.

7. An image reading method comprising the steps of:
(a) irradiating light onto an original being transported and receiving light reflected by the original;
(b) irradiating light onto a white reference member for shading correction and receiving light reflected by the original before and after the step (a); and
(c) detecting a trouble in an optical system involved in the steps (a) and (b) by using information obtained from the reflected light before and after the steps (a) and (b).

8. The image reading method as claimed in claim 7, further comprising a step of notifying a user of occurrence of the trouble detected.

9. The image reading method as claimed in claim 7, further comprising a step of outputting information indicating a location of the trouble detected.

10. The image reading method as claimed in claim 7, further comprising a step of detecting a trouble by additionally referring to information obtained by optically reading the original.

11. The image reading method as claimed in claim 7, further comprising a step of notifying a user of occurrence of a trouble only when the trouble is successively detected a given number of times by the step (c).

12. The image reading method as claimed in claim 7, further comprising a step of outputting an indication of the trouble detected by the control unit to an user.
